**Europäisches Patentamt**

**European Patent Office**

**Office européen des brevets**

(11) Veröffentlichungsnummer: **0 164 375**
**B1**

(12) **EUROPÄISCHE PATENTSCHRIFT**

(45) Veröffentlichungstag der Patentschrift:
16.12.87

(51) Int. Cl.⁴: **B 01 D 53/34**, F 23 J 15/00,
F 28 D 17/04

(21) Anmeldenummer: **85900078.8**

(22) Anmeldetag: **10.11.84**

(86) Internationale Anmeldenummer:
**PCT/EP 84/00355**

(87) Internationale Veröffentlichungsnummer:
**WO 85/02129 (23.05.85 Gazette 85/12)**

(54) **VERFAHREN UND EINRICHTUNG ZUR WIEDERAUFHEIZUNG DER REINGASE IM ANSCHLUSS AN DIE NASSREINIGUNG VON ROHGASEN.**

(30) Priorität: **12.11.83 DE 3341021**

(43) Veröffentlichungstag der Anmeldung:
**18.12.85 Patentblatt 85/51**

(45) Bekanntmachung des Hinweises auf die Patenterteilung:
**16.12.87 Patentblatt 87/51**

(84) Benannte Vertragsstaaten:
**GB**

(56) Entgegenhaltungen:
**DE-A-2 900 275**
**DE-A-3 110 361**

(73) Patentinhaber: **SRM SVENSKA ROTOR MASKINER AKTIEBOLAG, P.O. Box 15085, S-10465 Stockholm (SE)**

(72) Erfinder: **MÜLLER- ODENWALD, Hermann, Eugen, L 13, 8, D-6800 Mannheim (DE)**

(74) Vertreter: **Helber, Friedrich G., Dipl.- Ing., Patentanwälte Dipl.- Ing. F. G. Helber Dipl.- Ing. J.K. Zenz Giesser Weg 47, D-6144 Zwingenberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Wiedaraufheizung der Reingase im Anschluß an die Naßreinigung von Rohgasen durch reganerativen Wärmetausch zwischen dan Roh- und Reingasen, bei welchem dem Reingasstrom vor Durchführung des regenerativen Wärmetauschs ein zuvor bereits wieder aufgaheizter Reingas-Teilstrom zugemischt wird.

Bei der Entschwefelung der Rauchgase von Verbrennungsanlagen in einem Naßwäscher ist es bekannt, die gewaschenen Reingase in einem umlaufenden regenerativen Wärmetauscher gegen die ankommenden heißen Rohgase auf höhere Temperature wieder aufzuheizen, um sie auf das für den Auftrieb im Abgaskamin erforderliche Temperaturniveau zu bringen. Bei Gipsverfahren tritt dabei der Nachteil auf, daß mit den aus der Naßwäsche austretenden feucht gesättigten Reingasen Tröpfchen des Waschmedium mitgerissen werden, wodurch im Waschmedium enthaltener Gips mit in den regenerativen Wärmetauscher eingetragen wird, der sich in Form eines nur schwer löslichen Belages auf dessen wärmetauschenden Flächen niederschlägt. Es wurde deshalb bereits vorgeschlagen, die gewaschenen Reingase vor dem Eintritt in den Gas-Wärmetauscher durch Zumischung eines Teilstroms von Rohgasen ohne Zufuhr von Fremdenergie vorzutrocknen, so daß der Wassergehalt der Tropfen verdampft und der dann trockene Gipsstaub mit bekannten Mitteln leicht von den wärmetauschenden Flächen abgereinigt werden kann. Durch die Zumischung von Rohgas wird aber wiederum Schwefel in die Reingase eingetragen, wodurch der Entschwefelungsgrad beeinträchtigt wird. Durch eine Abwandlung des bekannten Verfahrens derart, daß anstelle des Rohgas-Teilstroms ein Teilstrom der bereits im Wärmetauscher wieder aufgeheizten Reingase abgezweigt und mittels eines Druckerhöhungsgebläses in die dem Wärmetauscher aus der Naßwäsche zugeführten Reingase zurückgeführt wird, wird dieser Nachteil vermieden (DE-A-32 25 716). Die Menge der rückgeführten Reingase wird hierbei abhängig von der Temperaturdifferenz der Reingase am Austritt aus der Gaswäsche und nach Zumischung des rückgeführten Teilstroms vor Eintritt in den Gas-Wärmetauscher geregelt.

Bekannt ist außerdem eine Lösung, bei welcher aus dem Gesamtstrom der Reingase ein Teilstrom abgezweigt, durch den Gesamtstrom der Rohgase vor deren Eintritt in die Naßwäsche in einem umlaufenden Regenerativ- Wärmetauscher erwärmt und in den Hauptstrom der Reingase vor der Entnahme des Teilstroms der Reingase wieder eingeleitet wird (DE-A-29 00 275). Durch den vorgeschalteten indirekten Wärmetausch zwischen dem rückgeführten Reingas-Teilstrom und dem Gesamtstrom der Rohgase werden letztere unter Wärmeübertragung auf den Reingas-Teilstrom gekühlt der Naßwäsche zugeleitet. Der hierbei hocherwärmte Reingas-Teilstrom tauscht anschließend Wärme in einem Gasmischer mit dem den Wäscher unmittelbar verlassenden Gesamtstrom der Reingase und wärmt diesen soweit wieder auf, daß die Reingase mit dem für ihren Auftrieb erforderlichen Temperaturniveau in den Abgaskamin eintreten.

Obwohl den Reingasen bei den beiden zuletzt beschriebenen bekannten Verfahren keine Rohgase zugemischt werden, wird infolge der Verwendung von umlaufenden regenerativen Wärmetauschern eine gewisse - wenn auch geringe - Menge von Rohgas auf die Reingasseite des Wärmetauschers übergeschleust, so daß in den aus dem Gas- Wärmetauscher austretenden Reingasen noch geringe Mengen von Schwefel enthalten sind.

Der Erfindung liegt demgegenüber die Aufgabe zugrunde, unter Einsatz eines regenerativen Wärmetauschers zwischen Roh- und Reingasen zur Wiederaufheizung der Reingase nach der Naßreinignung der Rohgase eine Vortrocknung für die Reingase vor Eintritt in den regenerativen Wärmetausch vorzunehmen und dabei den Gesamtentschwefelungsgrad weiter zu verbessern.

Ausgehend von einem Verfahren der eingangs erwähnten Art wird diese Aufgabe erfindungsgemäß dadurch gelöst, daß der Reingas-Teilstrom vor der regenerativen Wiederaufheizung der Reingase mittels den Rohgasen entzogener Wärmeenergie vom zuvor naßgewaschenen Reingas-Gesamtstrom abgezweigt, im Druck erhöht und vom Hauptstrom der Reingase getrennt in regenerativem Wärmetausch mit den Rohgasen erwärmt wird. Bei dieser Verfahrensweise kann der gegenüber dem Rohgasstrom im Druck höhere Reingas-Teilstrom als Sperrgasstrom zwischen den Rohgasen und dem Hauptstrom der Reingase eingeschaltet und der Übertritt von Rohgasen in den Reingas-Hauptstrom somit verhindert werden.

In einer bevorzugten Weiterbildung der Erfindung wird der durch getrennten regenerativen Wärmetausch erwärmte Reingas- Teilstrom, gesehen in Strömungsrichtung der Reingase vor seiner Abzweigung in den Hauptstrom der Reingase zurückgeführt. Der Reingas-Teilstrom dient also sowohl zur Verhinderung des Übertritts von Rohgasen in den Reingas-Hauptstrom, d.h. als Sperrgasstrom, als auch zur Wiederaufwärmung der kühlen, aus dem Naßwäscher austretenden Reingase.

Dabei empfiehlt es sich, den Druck des aus dem Hauptstrom der Reingase abgezweigten Teilstroms abhängig vom Druck der Rohgase vor deren regenerativen Wärmetausch mit den Reingasen zu regeln, um die Wirksamkeit als Sperrgasstrom auch bei Druckschwankungen des Rohgasstroms aufrechtzuerhalten.

Die mit einem von den Rohgasen einerseits und den aus dem Naßwäscher austretenden Reingasen andererseits durchströmten umlaufenden Regenerativ-Wärmetauscher arbeitende Einrichtung zur Durchführung des erfindungsgemäßen Verfahrens ist dadurch gekennzeichnet, daß im regenerativen Wärmetauscher zusätzlich zu dem Rohgas- und dem Reingaskanal ein dritter getrennter Durchströmmungskanal für den Reingas-Teilstrom ausgebildet ist, und daß der Durchströmungskanal für den Reingas-Teilstrom, gesehen in Drehrichtung des Regenerativ-Wärmetauschers auf den Rohgaskanal folgt und vor dem Reingaskanal angeordnet ist.

In einer vorteilhaften Weiterbildung der erfindungsgemäßen Einrichtung ist auf der heißen Seite des umlaufenden Regenerativ-Wärmetauschers zwischen dem Durchssrömungskanal für den Reingas-Teilstrom und dem Rohgaskanal eine Verbindung zur Zurückführung von vom Rohgaskanal in den Durchströmugskanal für den Reingas-Teilstrom übergeschleuste Rohgase vorgesehen. Dieser Verbindung kann eine Auffanghaube vorgeschaltet werden, die den aus dem Rauchgaskanal in den Reingaskanal jeweils übertretenden Sektor überdeckt oder es wird an ihrer Stelle eine entsprechende Verbreiterung des Abdichtsektors vorgesehen. Auf diese Weise werden aus dem Rohgassektor in den Reingassektor als Kammerfüllung übergeschleuste Rohgase durch einen entsprechenden Anteil des Reingas-Teilstroms in den Rohgaskanal zurückverdrängt.

Um den zur Verdrängung der Schleusgase eingesetzten Anteil des Reingas-Teilstroms auf die jeweils gerade erforderliche Menge einzustellen, ist es desweiteren vorteilhaft, in der Verbindung zwischen den Kanälen der Rohgase und des Reingas-Teilstroms Regelorgane anzuordnen.

Des weiteren ist es vorteilhaft, ein in der den Reingas-Teilstrom der kalten Seite des umlaufenden Regenerativ-Wärmetauschers zuführenden Leitung angeordnetes Druckerhöhungsgebläse mit regelbarem Antrieb vorzusehen, welches abhängig vom Druck der in den umlaufenden Regenerativ-Wärmetauscher eintretenden Rohgase steuerbar ist.

Die Erfindung ist in der folgenden Beschreibung eines Ausführungsbeispiels der erfindungsgemäßen Einrichtung in Verbindung mit der Zeichnung näher erläutert, und zwar zeigt:

Fig. 1 schematisch den Aufbau einer in der erfindungsgemäßen Weise ausgebildeten Einrichtung zur Wiederaufheizung dar Reingase im Anschluß an die Naßreinigung von aus einer Verbrennungsanlage austretenden Rohgasen;

Fig. 2 eine Draufsicht auf die heiße Stirnseite eines in der Einrichfung gemäß Fig. 1 verwendeten regenerativen Wärmetauschers mit umlaufauder Speichermasse und ruhenden Anschlußkanälen; und

Fig. 3 eine Schnittansicht eines alternativ verwendbaren regenerativen Wärmetauschers mit feststehender Speichermasse und umlaufenden Anschlußkanälen.

Die einen nicht dargestellten Kessel einer Verbrennungsanlage verlassenden Rohgase werden in einem Kessel-Luftvorwärmer 1 durch im Gegenstrom über ein Gebläse 3 dem Kessel-Luftvorwärmer zu ihrer Erwärmung zugeführte Verbrennungsluft gekühlt. Angchließend werden die gekühlten Rohgase über eine Leitung 5 Filtern 7 zugeführt, um sie von mitgeführten Feststoffen zu befreien, bevor sie über eine Leitung 9 und ein Saugzuggebläse 11 sowie einer Anschlußleitung 13 in den Kamin 15 eingeleitet werden.

Von der durch ein Regelorgan 17 abschließbaren Leitung 13 zweigt eine Leitung 20 ab, über die bei geschlossenem Regelorgan 17 durch ein an die Leitung 20 anschließendes Gebläse 22 und eine Anschlußleitung 24 die Rohgase einem umlaufenden Regenerativ-Wärmetauscher 26 zugeleitet werden. Über die Anschlußleitung 28 gelangen die Rohgase in einen Naßwäscher 30. Die Reingase verlassen den Naßwäscher über eine Leitung 32 und werden dann in einen über eine Anschlußleitung 34 weitergeführten Haupt- und einen über die Leitung 36 weitergeführten Teilssrom aufgeteilt, welche dem umlaufenden Regenerativ-Wärmetauscher 26 getrennt zugeleitet werden. Während hinter dem umlaufenden Regenerativ-Wärmetauscher der Hauptstrom der Reingase über die Leitung 38 in die Hauptgasleitung zurückgelangt und anschließend dem Abgaskamin 15 zugeleitet wird, wird der getrennt erwärmte Reingas-Teilstrom, der neben der Aufgabe der Vortrocknung des Reingas-Hauptstroms zugleich die eines Sperrgases erfüllt, über eine Leitung 42 von der heißen Seite des Regenerativ-Wärmetauschers auf die kalte Seite zurückgeführt und vor der Entnahmestelle in den Hauptstrom der Reingase eingeleitet, um diesen durch Temperaturerhöhung vorzutrocknen. Zur Förderung und Druckerhöhung des Reingas-Teilstroms dient ein in der Leitung 36 angeordnetes Gebläse 44.

Durch die gefundene Lösung wird eine Erhöhung der Menge des Reingasstroms durch zur Vortrocknung in das System eingeleitete Gase vermieden. Vielmehr wird ein Kreislauf eines Reingas-Teilstroms ausgehend von der kalten Seite des umlaufenden Regenerativ-Wärmetauschers, durch diesen hindurch und im Bypaß zu dessen kalter Seite zurückgeschlossen. Auf diese Weise wird auch dem Auftreten von Pulsationen im Zusammenhang mit offenen Kreisläufen wirksam begegnet.

Da die zur Vortrocknung eingesetzten Reingase bereits im Naßwäscher behandelt sind, wird eine erneute Eintragung von Schwefelverbindungen in den Reingas-Hauptstrom durch den Reingas-Teilstrom ausgeschlossen. Die zur Erwärmung für die Vortrocknung der Reingase in einem Reingas-Teilstrom durch einen getrennten Sektor des Wärmetauschers geführten Reingase übernehmen darüber hinaus aber auch noch die Aufgabe von Sperrgasen zwischen Roh- und Reingassektor und unterbinden die Ausbildung eines Leckgas-und Schleusgasstroms aus dem Rohgas- in den Reingaskanal des umlaufenden Regenerativ-Wärmetauschers. Dabei ist es von Vorteil, daß das zur Druckerhöhung und Förderung des Reingas-Teilstroms vorgesehene Gebläse 44 in der den noch nicht aufgewärmten Reingas-Teilstrom führenden Leitung 36 angeordnet ist, d.h. ein sogenanntes "kaltgehendes Reingasgebläse" ist.

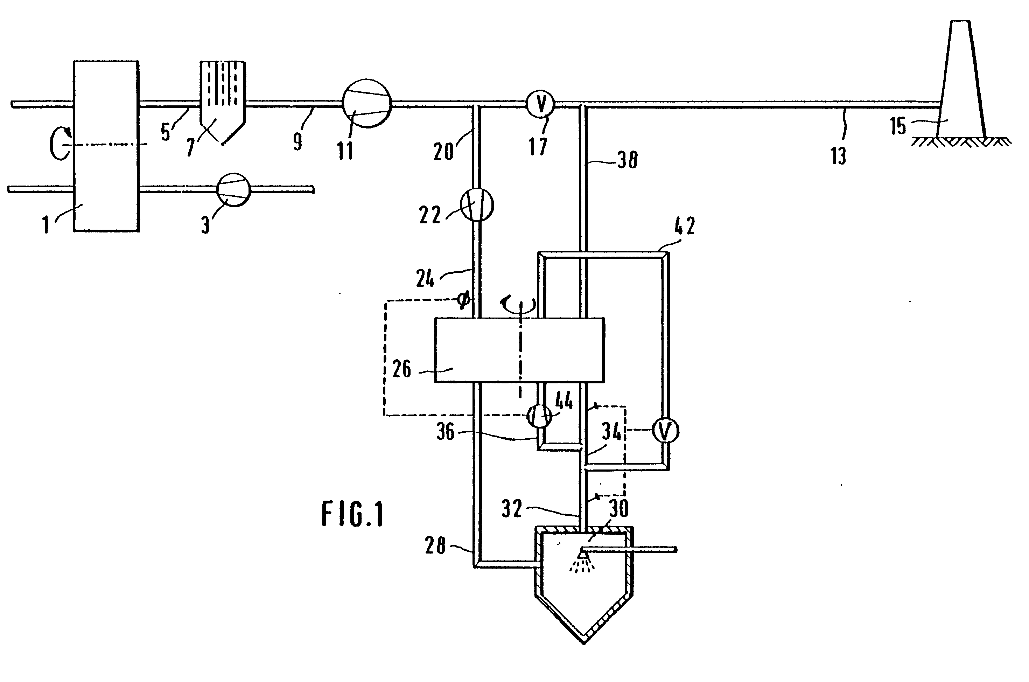

Die Regelung des Drucks und des Volumenstroms des Reingas-Teilstroms erfolgt einerseits in Abhängigkeit vom Druck der dem regenerativen Wärmetauscher in der Anschlußleitung 24 zugeführten Rohgase in dem Sinne, daß der Druck des Reingas-Teilstroms im Wärmetauscher höher als der Druck der Rohgase liegt, und andererseits von der nach der Rückführung des aufgeheizten Teilstroms der Reingase in den Haupsstrom vor dem Eintritt in den Wärmetauscher erhaltenen Temperaturerhöhung der Reingase im Vergleich zu ihrer Temperatur beim Austritt aus dem Naßwäscher 38. Die entsprechenden Meß- und Regelstrecken von den Meßpunkten zu den zu regelnden Organen sind in Fig. 1 nur schematisch gestrichelt eingezeichnet.

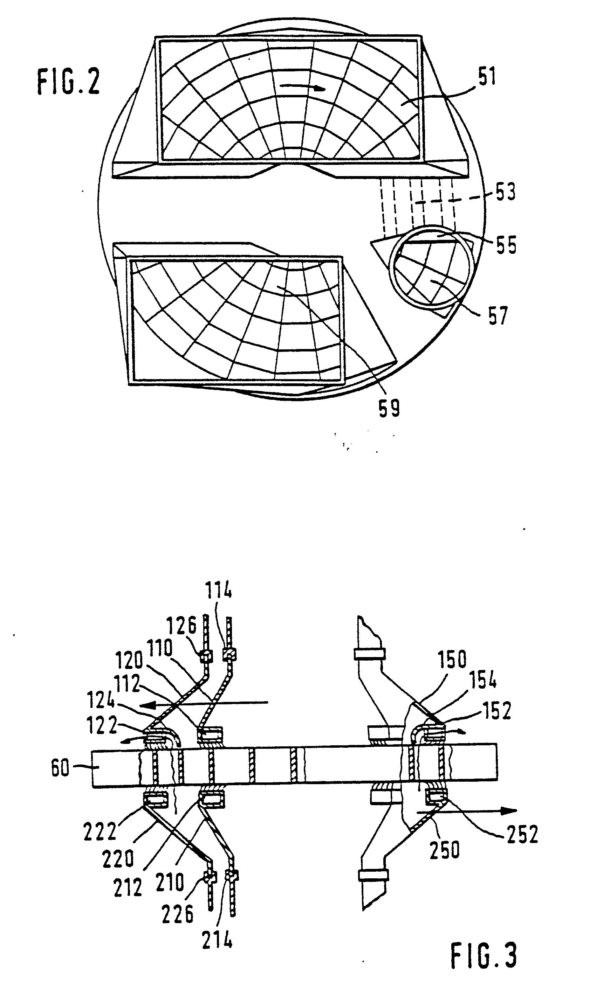

Figur 2 zeigt einen Regenerativ-Wärmetauscher mit umlaufender Speichermasse und ruhenden Anschlußkanlen in der Draufsicht auf die heiße Seite, wie er in dem in Verbindung mit Fig. 1 beschriebenen System Verwendung finden kann.

Zwischen dem Stutzen 51 des Gehäuses, durch den die Rohgase in die Speichermasse eingeleitet werden und dem Stutzen 59, durch den im Gegenstrom zu den Rohgasen die Reingase aus der Speichermasse abgeleitet werdan, ist bezogen auf die durch den im Rohgaskanal eingetragenen Pfeil angegebene Drehrichtung der umlaufenden Speichermasse ein weiterer Stutzen 57 des Gehäuses zwischengeschaltet. Diesen auf der oberen Stirnseite des Gehäuses vorgesehenen Stutzen des Gehäuses sind entsprechende Stutzen auf der unteren, in der Darstellung verdeckten kalten Stirnseite zugeordnet. Abweichend von der Ausführung der verdeckten kalten Stirnseite des Gehäuses ist auf der dargestellten heißen Seite jedoch innerhalb des den Reingas-Teilstrom aus der Speichermasse herausführenden Gehäusestutzens 57 eine Schürze 55 angeordnet. Diese Schürze 55 steht in Verbindung mit Leitungen 53, welche durch den Abdichtsektor hindurchgeführt sind. In den Leitungen 53 sind außerdem nichtdargestellte Regelorgane angeordnet. Durch die auf der heißen Seite im Stutzen 57 des Gehäuses angeordnete Schürze 55 und die anschließenden Leitungen 53 werden durch einen von der kalten Seite in die Speichermasse eintretenden Anteil des Reingas-Teilstroms mit der umlaufenden Speichermasse als Kammerfüllung in diesen Kanal übergeschleuste Rohgase abgeschöpft, übergeleitet und in den Rohgaskanal 51 zurückverdrängt.

Die Speichermasse wird durch diese Zuordnung der Gehäusestutzen und die zwischen ihnen angeordneten Abdichtsektoren in Verbindung mit zugeordneten Abdichtungen in Kanäle für drei Gasströme, nämlich den Rohgasstrom, den Reingas-Hauptstrom und den Reingas-Teilstrom unterteilt. Der im zwischengeschalteten Kanal strömende Reingas-Teilstrom dient zugleich als Gasstrom zur Vortrocknung der Reingase vor deren Eintritt in den Wärmetauscher, wofür er nach seiner Erwärmung innerhalb der Speichermasse anschließend im Bypaß vor die kalte Seite des Regenerativ-Wärmetauschers zurückgeführt und in den Reingas-Hauptstrom wieder eingeleitet wird.

In Figur 3 ist eine Aführungsform des umlaufenden Regenerativ-Wärmetauschers schematisch dargestellt, bei welcher - in kinematischer Umkehr zu den in Fig. 2 dargestellten Verhältnissen - die Speichermasse ruht, während die Anschlußkanäle der wärmetauschenden Medien, d.h. der Roh- und Reingase, umlaufen.

Für die dargestellte Ausführung ist vorausgesetzt, daß zu beiden Seiten der ruhenden Speichermasse 60 Reingase führende Hauben innerhalb (nicht dargestellter) fester Gehäuse-Anschlußkanäle der Rohgase umlaufen. Die die Reingase führenden Hauben sind als doppelflügelige obere und untere Hauben ausgebildet.

In der Darstellung ist jeweils ein Vertikalschnitt durch den in der Zeichnung vorderen Haubenflügel geführt. Hierdurch wird zugleich der beim Umlauf den Hauptstrom der Reingase führende mittlere, von den Haubenwänden 110, 120 eingeschlossene Kanal des vorderen Haubenflügels und auch der diesem entsprechend dem nach links weisenden Pfeil vorgeschaltete Kanal für den Teilstrom der Reingase des oberen und des unseren vorderen Haubenflügels als Sektor zwischen den Haubenwänden 110, 210 und diesen vorgesetzten Haubenwänden 120, 220 im Schnitt dargestellt. In der rechten Bildhälfte werden die den hinteren Haubenflügeln in Drehrichtung entsprechend dem nach rechts weisenden Pfeil vorgeschalteten Sektoren für den Reingas-Teilstrom teilweise aufgebrochen dargestellt. Den Wänden 110, 120 des oberen vorderen Haubenflügels und den Wänden 210, 220 des unteren vorderen Haubenflügels sind Abdichtsektoren 112, 122, 212, 222 der diesen vorgeschalteten Sektoren für den Reingas-Teilstrom zugeordnet. Entsprechend sind für die Wände 150, 250 der den jeweils hinteren und oberen Haubenflügeln in Drehrichtung vorgeschalteten Sektoren für den Reingas-Teilstrom gleichartige Abdichtsektoren 152, 252 dargestellt. Alle diese Abdichtsektoren stehen zum Ausgleich der kalottenförmigen Verformung des Speichermassenträgers unter den betrieblichen Belastungen mit Dichtungen auf der Seite der Speichermasse in Verbindung, die im dargestellten Fall als auf den Speichermassen-Stirnflächen schleifende Dichtleisten dargestellt sind.

Dem mit der Haubenwand 120 in Verbindung stehenden Abdichtsektor 122 des dem vorderen oberen Raubenflügel vorgeschalteten Sektors für den Reingas-Teilstrom ist eine Schürze 124 und dem mit der Haubenwand 150 in Verbindung stehenden Abdichtsektor 152 des dem hinteren oberen Haubenflügel vorgeschalteten Sektors für den Reingas-Teilstrom ist eine Schürze 154 vorgeschaltet. Entsprechend den vertikal von unten nach oben geschlängelt geführten Pfeilen innerhalb der Sektoren des Reingas-Teilstroms verdrängen die durch die Schürzen 124, 154 abgeschöpften Anteile von Reingasen über (nicht dargestellte) Verbindungen mit Regelorganen in den Abdichtsektoren 122, 125 bei der Drehung der Haubenflügel als Gasfüllung innerhalb der eintretenden Sektoren des Speichermassenträgers übergeschleuste Rohgase in den Rohgaskanal zu beiden Seiten der Haubenflügel zurück. Im Bereich des Halsquerschnitts der Haubenflügelpaare dienen tassenartig dargestellte Gasdichtungen 114, 214 zur Überleitung des Reingas-Hauptstroms von bzw. zu zentrisch fest angeordneten Gehäuse-Anschlußkanälen. Gleichartig ausgestaltete Gasdichtungen 126, 226 verbinden die bezüglich der Haubenachse diametral gegenüberliegenden, den einzelnen Haubenflügeln jeweils in Drehrichtung vorgeschalteten Sektor des Reingas-Teilstroms mit gleichfalls zentrischen Anschlußkanälen, welche die Anschlußkanäle der Haubenflügel koaxial mit kreisringförmigem Querschnitt umschließen.

Unabhängig davon, ob ein umlaufender Regenerativ-Wärmetauscher mit feststehenden Anschlüssen und umlaufender Speichermasse gemäß Fig. 2 oder ein solcher Wärmetauscher mit feststehender Speichermasse und umlaufenden Anschlüssen gemäß Fig. 3 Verwendung findet, wird der Reingas-Teilstrom jeweils in doppelter Funktion eingesetzt, nämlich als Sperrgasstrom, welcher ein Übertritt von Rohgasen zu den aus dem Wärmetauscher austretenden Reingasen und so die Eintragung von Schwefelbestandteilen aus den Roh- in die Reingase verhindert, und außerdem als Trocknungsstrom, welcher infolge der Aufheizung im Wärmetauscher nach Zurückführung in den dem Wärmetauscher zuströmenden Reingas-Hauptstrom die Temperatur der Reingase anhebt und somit ihre relative Feuchte soweit vermindert, daß die Ausscheidung fest anbackender schädlicher Beläge in der Speichermasse aus den Reingasen verhindert wird.

**Patentansprüche**

1. Verfahren zur Wiederaufheizung der Reingase im Anschluß an die Naßreinigung von Rohgasen durch regenerativen Wärmetausch zwischen den Roh- und Reingasen, bei welchem den Reingasstrom vor Durchführung des regenerativen Wärmetauschs ein zuvor bereits wieder aufgeheizter Reingas-Teilstrom zugemischt wird, dadurch gekennzeichnet, daß der Reingas-Teilstrom vor der regenerativen Wiederaufheizung der Reingase mittels den Rohgasen entzogener Wärmeenergie vom zuvor naßgewaschenen Reingas-Gesamtstrom abgezweigt, im Druck erhöht und vom Hauptstrom der Reingase getrennt in regenerativem Wärmetausch mit den Rohgasen erwärmt wird.

2. Verfahren nach Anspruch 1, dadurch gekennzeichnet, daß der durch getrennten regenerativen Wärmetausch erwärmte Reingas-Teilstrom, gesehen in Strömungsrichtung der Reingase vor seiner Abzweigung in den Hauptstrom der Reingase zurückgeführt wird.

3. Verfahren nach Anspruch 1 oder 2, dadurch gekennzeichnet, daß der Druck des aus dem Hauptstrom der Reingase abgezweigten Teilstroms abhängig vom Druck der Rohgase vor deren regenerativen Wärmetausch mit den Reingasen geregelt wird.

4. Einrichtung zur Durchfürung des Verfahrens nach einem der Ansprüche 1 bis 3 mit einem von den Rohgasen einerseits und den aus dem Naßwäscher austretenden Reingasen andererseits durchströmten umlaufenden Regenerativ-Wärmetauscher, dadurch gekennzeichnet, daß im regenerativen Wärmetauscher (26) zusätzlich zu dem Rohgas- und dem Reingaskanal (51; 59) ein dritter getrennter Durchströmungskanal (57) für den Reingas-Teilstrom ausgebildet ist, und daß der Durchströmungskanal (57) für den Reingas-Teilstrom, gesehen in Drehrichtung des regenerativen Wärmetauschers auf den Rohgaskanal folgt und vor dem Reingaskanal angeordnet ist.

5. Einrichtung nach Anspruch 4, dadurch gekennzeichnet, daß auf der heißen Seite des umlaufenden Regenerativ-Wärmetauschers (26) zwischen dem Durchströmungskanal (57) für den Reingas- Teilstrom und den Rohgaskanal (51) eine Verbindung (53; 55) zur Zurückführung von vom Rohgaskanal (51) in den Durchströmungskanal (57) für den Reingas-Teilstrom überschleusten Rohgasen vorgesehen ist.

6. Einrichtung nach Anspruch 5, gekennzeichnet durch Regelorgane in der Verbindung (53) zwischen den Kanälen (51; 57) der Rohgase und des Reingas-Teilstroms zur Einstellung des Volumenstroms von in den Rohgaskanal zurückzuführenden übergeschleusten Rohgasen und diesen folgenden Reingasen.

7. Einrichtung nach einem der Ansprüche 4 bis 6, gekennzeichnet durch ein in der den Reingas-Teilstrom auf der kalten Seite des umlaufenden Regenerativ-Wärmetauschers (26) zuführenden Leitung (36) angeordnetes Druckerhöhungsgebläse (44) mit regelbarem Antrieb.

## Claims

1. A method for reheating of cleaned gases subsequent to the wet cleaning of raw gases by means of regenerative heat exchange between the raw and cleaned gases, in which a previously already reheated partial flow of cleaned gas is added to the cleaned gas flow prior to the performance of the regenerative heat exchange, characterized in that the partial flow of cleaned gas, prior to the regenerative reheating of the cleaned gases by means of heat energy withdrawn from the raw gases, is diverted from the previously wet-cleaned total flow of cleaned gas, increased in pressure and heated, separately from the main flow of the cleaned gases, in the regenerative heat exchange with the raw gases.

2. A method according to claim 1, characterized in that the partial flow of cleaned gas heated by separate regenerative heat exchanger is recirculated into the main flow of cleaned gases prior to where it is diverted, as viewed in the flow direction of the cleaned gases.

3. A method according to claim 1 or 2, characterized in that the pressure of the partial flow diverted from the main flow of the cleaned gases is regulated in accordance with the pressure of the raw gases prior to their regenerative heat exchange with the cleaned gases.

4. An apparatus for performing the method according to one of the claims 1-3, having a rotating regenerative heat exchanger through which raw gases, on the one hand, and the cleaned gases emerging from the wet-wash cleaner on the other flow, characterized in that in the regenerative heat exchanger (26) in addition to the raw gas and the cleaned gas ducts (51; 59), a third separate flow-through duct (57) is embodied for the partial flow of cleaned gas, and that the flow-through duct (57) for the partial flow of cleaned gas is disposed following the raw gas duct and prior to the cleaned gas duct, as viewed in the direction of rotation of the regenerative heat exchanger.

5. An apparatus according to claim 4, characterized in that on the hot side of the rotating regenerative heat exchanger (26), between the flow-through duct (57) for the partial flow of cleaned gas and the raw gas duct (51), a connection (53; 55) is provided for recirculating raw gases introduced from the raw gas duct (51) into the flow-through duct (57) for the partial flow of cleaned gas.

6. An apparatus according to claim 5, characterized by control elements in the connection (53) between the ducts (51; 57) for the raw gases and the partial flow of cleaned gas, for adjusting the volumetric flow of introduced raw gases to be recirculated into the raw gas duct and of cleaned gases following these raw gases.

7. An apparatus according to one of the claims 4-6, characterized by a pressure-increasing blower (44) with a controllable drive which is disposed in the line (36) delivering the partial flow of the cleaned gas to the cold side of the rotating regenerative heat exchanger (26).

## Revendications

1. Procédé pour réchauffer les gaz purifiés après l'épuration par voie humide de gaz bruts par échange thermique régénératif entre gaz bruts et gaz purifiés, selon lequel le courant de gaz purifié, avant l'exécution de l'échange thermique régénératif, est mélangé d'abord avec un courant partiel de gaz purifié déjà réchauffé, caractérisé par le fait que le courant partiel de gaz purifié, avant le réchauffage régénératif des gaz purifiés, est dérivé du courant total de gaz purifié, préalablement lavé par voie humide, au moyen de l'énergie thermique prélevée des gaz bruts, est élevé en pression et séparé du courant principal des gaz purifiés, est chauffé en échange thermique régénératif avec les gaz bruts.

2. Procédé selon la revendication 1, caractérisé par le fait que le courant partiel de gaz purifié, chauffé par échange thermique régénératif séparé, est recyclé dans le courant principal des gaz purifiés en amont de sa dérivation, vue dans la direction du courant de gaz purifiés.

3. Procédé selon la revendication 1 ou 2, caractérisé par le fait que la pression du courant partiel dérivé du courant principal des gaz purifiés est réglée indépendamment de la pression des gaz bruts avant leur échange thermique régénératif avec les gaz purifiés.

4. Dispositif pour la mise en oeuvre du procédé selon l'une des revendications 1 à 3, comportant un échangeur thermique régénératif tournant, traversé, d'une part, par les gaz bruts, et, d'autre part, par les gaz purifiés sortant du laveur par voie humide, caractérisé par le fait que, dans l'échangeur thermique régénératif (26) est ménagé, en plus du canal à gaz brut et du canal à gaz purifié (51; 59), un troisième canal de passage séparé (57) pour le courant partiel de gaz purifié et vu dans la direction de rotation de l'échangeur thermique régénératif, ce canal de passage (57) du courant partiel de gaz purifié, fait suite au canal de gaz brut et précède le canal de gaz purifié.

5. Dispositif selon la revendication 4, caractérisé par le fait que, du côté chaud de l'échangeur thermique régénératif, tournant (26), est prévu, entre le canal de passage (57) pour le courant partiel de gaz purifié et le canal de gaz brut (51), une communication (53; 55) pour recycler des gaz bruts passés du canal de gaz brut (51) dans le canal de passage (57) par le courant partiel de gaz purifié.

6. Dispositif selon la revendication 5, caractérisé par des organes de réglage dans les éléments de communication (53) entre les canaux (51; 57) des gaz bruts et du courant partiel de gaz purifié pour régler le volume de courant de gaz bruts passés en étant recyclés dans le canal de gaz bruts et de gaz purifiés suivant ceux-ci.

7. Dispositif selon l'une des revendications 4 à 6, caractérisé par une soufflante élévatrice de pression (44), à commande réglable, montée dans la conduite (36) conduisant le courant partiel de gaz purifié au c*oté froid de l'échangeur thermique régénératif tournant (26).

FIG.1

0 164 375

FIG.2

FIG.3